# EUROPEAN PATENT APPLICATION

(11) **EP 2 485 436 A1**
(43) Date of publication of application: **08.08.2012**
(21) Application number: 09849939.5
(22) Date of filing: 29.09.2009
(51) Int. Cl.: H04L 12/403

(54) **COMMUNICATION METHOD IN A PROFINET COMMUNICATION SYSTEM**

(71) Applicant: Siemens Aktiengesellschaft, 80333 Munich (DE)
(72) Inventor: TIAN, Jifeng, Beijing 100102 (CN); LI, Hui, Beijing 100016 (CN); LAMPE, Mattias, Beijing 100102 (CN); MÜLLER, Jörg, D-76351 Linkenheim (DE)
(86) International application number: PCT/CN2009/001110
(87) International publication number: WO 2011/038531

(57) **Abstract**

The present invention provides a communication method in a PROFINET communication system, in which according to the real-time application requirements of a service, a preset data transmission cycle is divided into N periods, with the N periods including at least two of: a high real-time (HRT) communication period, a low real-time (LRT) communication period and a non-real-time (NRT) communication period; and an access point (AP) is used for carrying out data transmission according to an HRT transmission mechanism during the HRT communication period within the data transmission cycle, for carrying out data transmission according to an LRT transmission mechanism during the LRT communication period, and for carrying out data transmission according to an NRT transmission mechanism during the NRT communication period. By way of this method, the demand for applications with different real-time requirements to coexist during PROFINET communication can be satisfied.

## Description

### Technical field

The present invention relates to the technical field of mobile communication and, particularly, to a communication method in a PROFINET communication system.

### Background art

PROFINET is a new generation automatic bus standard based on industrial Ethernet technology. In the PROFINET standard, according to the differences in acknowledgement time, three different communication modes are defined: non-real-time (NRT) communication, real-time (RT) communication and isochronous real-time (IRT) communication. For IRT communication, the acknowledgement time thereof is required to be within 1 ms, and it is difficult for the framework based on the currently available 802.11 to satisfy it; the current wireless local area network (WLAN) devices can merely support NRT communication and RT communication, therefore, the present invention is merely interested in NRT and RT communication modes.

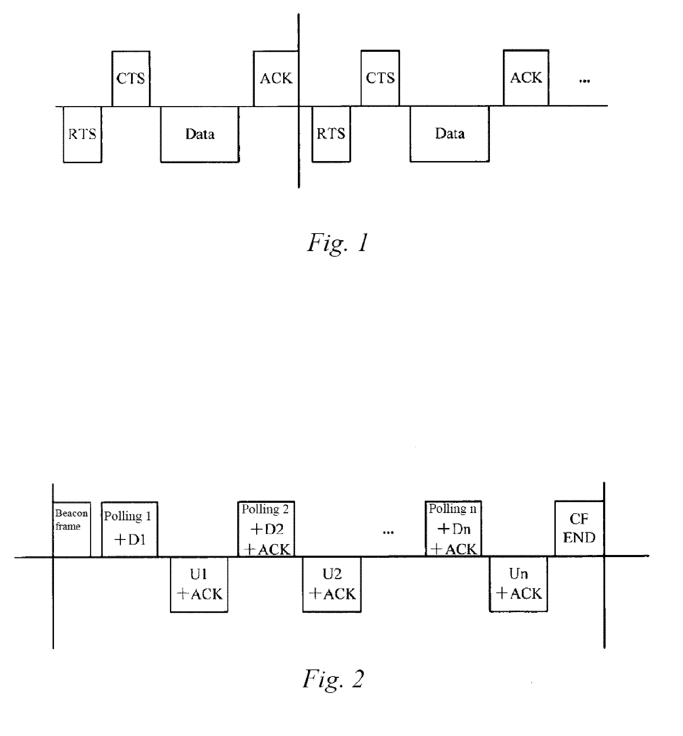

As for NRT communication, it transmits data having no strict time requirements based on transmission control protocol (TCP), user datagram protocol (UDP) or Internet protocol (IP), and the traditional distributed coordination function (DCF) can realize NRT communication. DCF is a competition mechanism in the traditional WLAN devices, and all client terminals (STA) associated with AP are able to access the channels by way of random competition, thus avoiding collision. As shown in Fig. 1, the STAs send a data sending request in a Request To Send (RTS) frame, the AP allows, in a Clear To Send (CTS) frame, by way of the collision avoidance mechanism, one of the STAs to send data and prohibits other STAs from sending data; the allowed STA sends data, and the AP replies with an acknowledgement (ACK) after receiving the data. In the DCF mechanism, the AP cannot control the STA, and the data transmission is started by the STA at some random moments, therefore, DCF cannot ensure the certainty of data transmission and is merely suitable for NRT communication.

In RT communication, it can further be divided into high real-time (HRT) communication and low real-time (LRT) communication. The acknowledgement time required by HRT communication is generally from 3 ms to 5 ms, and the acknowledgement time required by LRT communication is generally from 10 ms to 30 ms.

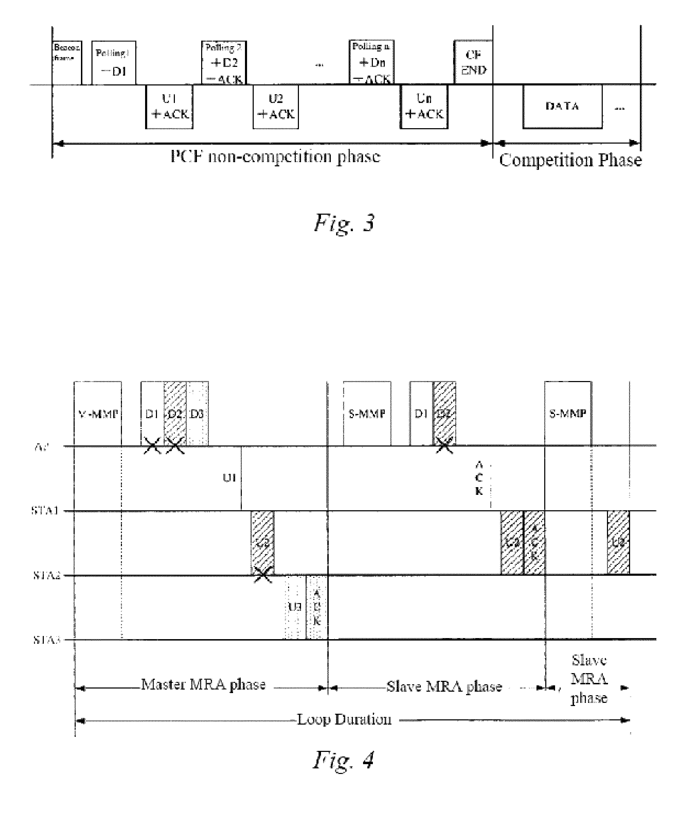

As for LRT communication, point coordination function (PCF) can be adopted for the implementation thereof; PCF is a non-competition channel access solution proposed in the 802.11 standard, and it is based on a polling mechanism, i.e. the AP polls each STA using a defined polling list, and each STA can only access the channel after being polled by the AP. As shown in Fig. 2, the AP sends downlink data D1 to a first STA in the polling list during polling 1, the first STA sends uplink data U1 to the AP after being polled and receives an acknowledgement ACK of D1, the AP sends downlink data D2 to a second STA in the polling list and receives an acknowledgement ACK of U1 during polling 2, the second STA sends uplink data U2 to the AP after being polled and receives an acknowledgement ACK of D2, and so forth, until the polling to all the STAs in the polling list is finished. In addition, in the PCF mechanism, a CF END frame can be used to mark the end of the polling, and the competition mechanism is continued after the CF END frame. As shown in Fig. 3.

As for HRT communication, multiple receiver aggregation (MRA) mechanism can be adopted for the implementation thereof, and more preferably, the MRA mechanism can be a master-slave multiple receiver aggregation (MS-MRA) mechanism. As shown in Fig. 4, the AP uses a multiple receiver aggregation multi-polling (MMP) frame as a management frame, and achieves control of each STA in the MMP frame and schedules the moment for each STA to send uplink data, ensuring deterministic data transmission. In this case, MMP has two types: master MMP and slave MMP, of which the master MMP is used to schedule the first data transmission; and the slave MMP is used to schedule the retransmitted uplink data. After the MMP, the AP carries out downlink data transmission toward each STA, i.e. MRA, then each STA sends uplink data at the scheduled moment. The "x" in Fig. 4 identifies failed transmission; the data which has failed to be transmitted will be retransmitted at the slave MRA phase until it is successfully transmitted or a preset threshold for number of retransmissions is reached.

Because HRT, LRT and NRT communications adopt totally different channel access mechanisms, in the prior art the AP can only adopt one of the mechanisms in PROFINET communication; however, in the practical PROFINET communication system, there is usually a demand for applications with different real-time requirements to coexist, and the prior art cannot satisfy this demand.

### Contents of the Invention

In view of this, the present invention provides a communication method in a PROFINET communication system, so as to satisfy the demand for applications with different real-time requirements to coexist in PROFINET communication.

A communication method in a PROFINET communication system, the method including:
dividing a preset data transmission cycle into N periods according to the real-time application requirements of a service, with the N periods including at least two of: a high real-time (HRT) communication period, a low real-time (LRT) communication period, and a non-real-time (NRT) communication period; and
an access point AP carrying out data transmission according to an HRT transmission mechanism during the HRT communication period within the data transmission cycle, carrying out data transmission according to an LRT transmission mechanism during the LRT communication period, and carrying out data transmission according to an NRT transmission mechanism during the NRT communication period;
wherein the duration of said data transmission cycle is less than or equal to the shortest time cycle required by HRT.

Preferably, the priority order of said N periods within the data transmission cycle from high to low is: the HRT communication period, the LRT communication period, and the NRT communication period.

Particularly, said HRT transmission mechanism is a multiple receiver aggregation (MRA) mechanism, said LRT transmission mechanism is a point coordination function (PCF) mechanism, and said NRT transmission mechanism is a distributed coordination function (DCF) mechanism.

Said AP generates a polling list in advance according to the operating mechanisms of the client terminals (STA), which includes in particular: if there is an STA operating the MRA mechanism, then taking the AP itself as the first object to be polled in the polling list; if there is an STA operating the PCF mechanism, then arranging those STAs operating the PCF mechanism in the polling list from high to low behind the AP according to the acknowledgement time requirements thereof.

In this case, said arranging those STAs operating the PCF mechanism in the polling list from high to low according to acknowledgement time requirements includes in particular: arranging those STAs having the same acknowledgement time requirement among the STAs operating the PCF mechanism into one polling group, the higher the acknowledgement time requirement of an STA, the higher the ranking of the STA in the polling list, and the STAs in the same polling group are arranged in the polling list from bottom to top according to the associated identifiers thereof.

Furthermore, said AP sends a beacon frame at the beginning of each data transmission cycle to instruct all the STAs operating the DCF mechanism to suspend the data transmission.

Preferably, said AP determines whether there is a current HRT service which needs to be transmitted, if yes, then it enters an HRT communication period after said beacon frame; otherwise it enters an LRT communication period after said beacon frame.

Within said HRT communication period, if said AP determines that the first object to be polled in the polling list is the AP itself, then it starts data transmission with those STAs operating the MRA mechanism by way of self-polling, and at the end of the data transmission, said AP sends a transmission block acknowledgement B-ACK to indicate the end of the HRT communication period.

Particularly, at the beginning of said LRT communication period, said AP performs the following steps:
A. according to the polling list, judge whether there is a next STA to be polled, if yes, then perform step B; otherwise send a CF END frame to indicate the end of the LRT communication period;
B. determine the remaining duration of the current data transmission cycle, and determine the duration needed for one polling within the LRT communication period; judge whether the remaining duration so determined is greater than or equal to the duration needed for one polling within the LRT communication period, if yes, then perform step C; otherwise perform step D;
C. carry out the next polling according to the order in the polling list, and return to step A after the next polling is ended;
D. wait for the next data transmission cycle when the data transmission is no longer carried out within the remaining duration of the current data transmission cycle.

At the beginning of said LRT communication period, polling is started by continuing from the STA in the polling list which was not polled in the previous data transmission cycle.

Preferably, within said LRT communication period, after all the STAs in one polling group have been polled, data retransmission is carried out for each STA in the polling group, until all the data are successfully transmitted or a preset threshold for number of retransmissions is reached.

Before the beginning of said NRT communication period, said AP determines the remaining duration of the current data transmission cycle and the random competition duration of an NRT, judges whether the remaining duration so determined is greater than or equal to the random competition duration of an NRT, if yes, then said AP sends a CF END frame to instruct the STAs operating the DCF mechanism to start the NRT communication; otherwise it does not carry out data transmission within the remaining duration, and waits for the next data transmission cycle.

After having sent the CF END frame, said AP enters the NRT communication period, if it is required to carry out downlink data transmission, then it first determines the remaining duration of the current data transmission cycle and the duration of downlink communication, judges whether the remaining duration so determined is greater than or equal to the duration of downlink communication, if yes, then it allows downlink data transmission to be carried out; otherwise it prohibits the downlink data transmission.

Furthermore, after having received said CF END, if it is required to carry out uplink data transmission, then the STAs operating the DCF mechanism send an RTS to carry out random competition, wherein the RTS includes the duration NAV_{RTS} of uplink communication;
after having received the RTS from the STA succeeding in the competition, the STAs that have failed in the competition among those STAs operating the DCF mechanism set the duration for suspending data transmission as NAV_{RTS};
after having received the RTS sent from the STA succeeding in the competition, said AP determines the remaining duration of the current data transmission cycle and the remaining duration after an uplink communication if such is completed; if said NAV_{RTS} is less than or equal to the duration remaining after uplink communication if such is completed, then said AP sends a CTS to instruct the STA succeeding in the competition to carry out uplink communication, and instruct that the duration for those STAs that have failed in the competition to suspend data transmission is the duration for the STA succeeding in the competition to perform the uplink communication; if said NAV_{RTS} is greater than the duration remaining after uplink communication if such is completed, and is less than or equal to the remaining duration of the current data transmission cycle, then said AP sends a CTS to instruct the STA succeeding in the competition to carry out uplink communication, and instruct those STAs that have failed in the competition to suspend data transmission until the end of the current data transmission cycle; and if said NAV_{RTS} is greater than the remaining duration of the current data transmission cycle, then said AP sends an RTS to instruct all the STAs operating the DCF mechanism to suspend data transmission until the end of the current data transmission cycle.

It can be seen from the above description that the present invention divides one preset data transmission cycle into N periods, with the N periods including at least two of: an HRT communication period, an LRT communication period, and an NRT communication period, and data communication is carried out within each period according to a corresponding transmission mechanism. By way of this method, services having different real-time application demands are integrated into one communication framework, and it is thereby achieved that the demand for applications with different real-time requirements to coexist is satisfied in a PROFINET system.

### Description of the accompanying drawings

Fig. 1 is a schematic view of a DCF mechanism in the prior art.
Fig. 2 is a schematic view of a PCF mechanism in the prior art.
Fig. 3 is a schematic view of another PCF mechanism in the prior art.
Fig. 4 is a schematic view of an MS-MRA mechanism in the prior art.
Fig. 5 is a schematic view of a data transmission cycle when three communication modes provided in the present invention coexist.
Fig. 6 is an exemplary view of a PROFINET communication scenario provided in the present invention.
Fig. 7 is a schematic view of three situations within the NRT communication period provided in the present invention.

### Particular embodiments

In order to make the objects, technical solutions and advantages of the present invention more apparent, the present invention will be described hereinafter in detail in conjunction with the accompanying drawings and particular embodiments.

The method provided in the present invention mainly includes: dividing a preset data transmission cycle into N periods according to the real-time application requirements of a service, with the N periods including at least two of: an HRT communication period, an LRT communication period and an NRT communication period; an AP carrying out data transmission within the HRT communication period of the data transmission cycle according to an HRT transmission mechanism, carrying out data transmission within the LRT communication period according to an LRT transmission mechanism, and carrying out data transmission within the NRT communication period according to an NRT transmission mechanism.

Among them, the HRT transmission mechanism can be an MRA mechanism, such as an MS-MRA mechanism, the LRT transmission can be a PCF mechanism, and the NRT transmission mechanism can be a DCF mechanism; certainly other transmission mechanisms can be adopted respectively, as long as they satisfy the acknowledgement time requirements.

In the present invention, the preset data transmission cycle can be adopted to carry out data transmission, the duration of the data transmission cycle at least satisfying the HRT real-time requirement, for example, less than or equal to the shortest time cycle which ensures the HRT real-time requirement.

The durations of the N periods divided within each data transmission cycle can be preset, then within each data transmission cycle, the data transmission is carried out according to the presetting. More preferably, the duration of each period can be not preset, but determined according to the particular data transmission situation, and the following embodiments are all described in terms of this way.

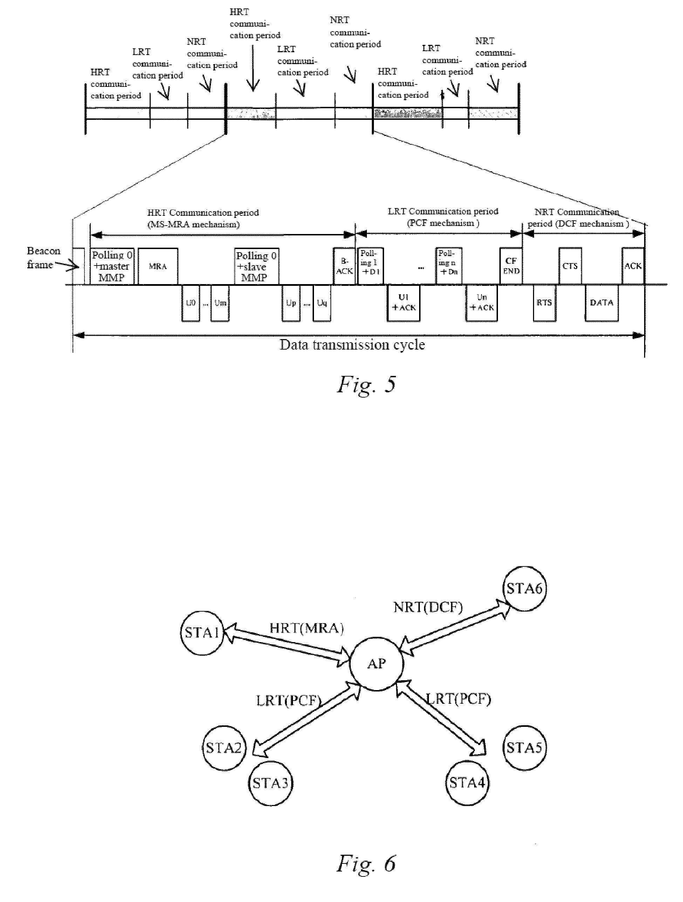

If the AP learns from the top layer that there are services meeting HRT, LRT and NRT real-time demands at the same time, then the situation where HRT communication, LRT communication and NRT communication coexist can be as shown in Fig. 5, each data transmission cycle being divided into 3 periods: an HRT period, an LRT period and an NRT period, and the duration of each period within each data transmission cycle can be adjusted according to the particular data transmission situation.

According to the degree of real-time requirements, the priority order of the N periods divided from the data transmission cycle is: the priority of the HRT communication period is the highest, the priority of the LRT communication period is secondary, and the priority of the NRT communication period is the lowest. That is to say, if there is an HRT real-time requirement, then the HRT communication period is arranged at the foremost end of the data transmission cycle, i.e. the data transmission of the HRT service is carried out first.

After having learnt from the top layer the current real-time demand, the AP will generate a polling list according to the operation mechanisms of the STAs. The AP is able to acquire the operation mechanism attributes of each STA from associated request frames sent by each STA, and can determine whether the operation mechanism of each STA is MRA, PCF or DCF. The specific principles for generating the polling list can be as follows:
if there are STAs operating the MRA mechanism, then the AP itself is taken as the first one in the polling list. Since the rank in the existing polling list is ascending according to the associated identifiers (AID), this can be achieved by setting the AID value of the AP as 0.

The AP acquires the acknowledgement time requirement information of the STAs operating the PCF mechanism from the configuration file, and performs ranking in the polling list from high to low according to the acknowledgement time requirements. The STAs having the same acknowledgement time requirement can be arranged into one polling group first, and a polling group with higher acknowledgement time requirements is arranged towards the front; and ascending ranking is adopted in the same polling group according to AID.

It is assumed that in the PROFINET communication scenario as shown in Fig. 6, 1 AP and 6 STAs are included, wherein STA1 is a PNIO client terminal operating the MRA mechanism with the acknowledgement time thereof being within 5 ms; STA2 and STA3 are PNIO client terminals operating the PCF mechanism with the acknowledgement time thereof being within 10 ms; STA4 and STA5 are PNIO client terminals operating the PCF mechanism with the acknowledgement time thereof being within 20 ms; STA6 is a MOBIC client terminal for checking the connection status of CPU and AP and operating the DCF mechanism, without strict real-time requirements. Then the generated polling list can be as shown in Table 1.

**Table 1**

| Polling sequence number | AID | Object to be polled | Polling group | Acknowledgement time |
|---|---|---|---|---|
| 1 | 0 | AP | | |
| 2 | 4 | STA3 | 1 | 10 ms |
| 3 | 5 | STA2 | 1 | 10 ms |
| 4 | 2 | STA4 | 2 | 20 ms |
| 5 | 3 | STA5 | 2 | 20 ms |

After the polling list is generated according to the above-mentioned principles, data transmission is carried out within each data transmission cycle according to the polling list.

Arranging the AP foremost in the polling list is to introduce the MRA mechanism by way of AP self-polling, which will be particularly described hereinafter.

Still as shown in Fig. 5, various communication periods will be described hereinafter.
1) Within each data transmission cycle, the transmission of a beacon frame is always at the beginning, in order to prevent the STAs operating the DCF mechanism within the data transmission cycle from conflicting with those STAs operating the MRA mechanism and PCF mechanism when accessing the communication channel, all the STAs operating the DCF mechanism can be instructed in the beacon frame to suspend data transmission. Particularly, the maximum duration field (CFP maxDuration) for the non-competition phase in the beacon frame can be set as the duration of one data transmission cycle; after those STAs operating the DCF mechanism have received the beacon frame, if the CFP maxDuration field is set as the duration of one data transmission cycle, then it sets its own network allocation vector (NAV) as the duration of one data transmission cycle as well, thus the STAs operating the DCF mechanism will suspend data transmission within the data transmission cycle until a new transmission instruction is received thereby.
   After the transmission of the beacon frame is completed, enter HRT communication period.
2) HRT communication period:
   Herein, the MS-MRA mechanism is taken as an example to realize the short acknowledgement time required by HRT communication. In this embodiment, because the AP has already been added into the polling list and arranged at the first position, the AP starts polling within the HRT communication period, i.e. polling 0 in Fig. 5, polling 0 is the self-polling of the AP, and the MS-MRA is integrated into the polling framework by way of self-polling. In this polling, the AP starts to send the master MMP and sends downlink data by way of MRA, each STA operating the MS-MRA mechanism sends uplink data at the corresponding moment using the scheduling information in the master MMP, i.e. U0 to Um in the figure, and replies with the receiving acknowledgement of the downlink data (not shown in Fig. 5); the AP performs retransmission scheduling on the uplink data that failed to be received, according to the receiving condition of the uplink data and acknowledgement, sends the retransmission scheduling information to the STAs operating the MS-MRA mechanism through the slave MMP, and retransmits the downlink data that the STA failed to receive, i.e. D1 in Fig. 5, and the STA carries out the retransmission of the uplink data according to the scheduling information in the slave MMP and replies with the acknowledgement of D1; the slave MRA process is repeated until no uplink data or downlink data has failed to be received or a preset number of retransmission times is reached, and a transmission block acknowledgement (B-ACK) is finally sent out, at which point the HRT communication period ends.
3) LRT communication period:
   At the beginning of the LRT communication period, the AP will perform the following steps:
      Step A. Judge whether there is a next STA to be polled according to the polling list, if yes, then perform step B; otherwise send a CF END frame to indicate the end of the LRT communication period.
         If there is no STA to be polled in the polling list, then a CF END frame identifier can be sent and an NRT communication period entered, and the NRT communication period will be described hereinafter in detail.
      Step B. Determine the remaining duration CycleDurRemaining of the current data transmission cycle and determine the duration PollDuration needed by for one polling within the LRT communication period.
         In this case, within the LRT communication period, the duration needed to operate a PCF polling can be: PollDuration = T_{polling+D}+SIFS+T_{U+ACK}+SIFS+T_{ACK}, wherein T_{polllng+D} is the transmission duration of the downlink data in one polling, SIFS is the interval between priority frames, T_{U+ACK} is the transmission duration of uplink data and the receiving acknowledgement of downlink data in one polling, and T_{ACK} is the transmission duration of the receiving acknowledgement of the uplink data.
      Step C. Judge whether CycleDurRemaining is greater than or equal to PollDuration, i.e. judge whether the remaining duration of the current data transmission cycle is enough to carry out one polling within one LRT communication period, if yes, perform step D; otherwise perform step E.
      Step D. Carry out the next polling according to the order in the polling list, and return to perform step A after the next polling is finished.
         After every polling is ended, it is necessary to carry out a judgment about whether there is a next polling, and if yes, then to judge whether the remaining duration is enough to perform the operation of the next polling.
      Step E. Wait for the next data transmission cycle when the data transmission is no longer carried out within the remaining duration of the current data transmission cycle.
         If the remaining duration of the current data transmission cycle is not enough to carry out one polling within the LRT communication period, data transmission will no longer be carried out within the remaining duration; the STAs which have not been polled in the current data transmission cycle will be polled within the LRT communication period of the next data transmission cycle.
         It needs to be noted that at the beginning of each data transmission cycle, it can first be determined whether there are HRT service data; if yes, then the HRT communication period is entered after the beacon frame, if no, then the LRT communication period is entered directly, and within the LRT communication period, the polling is continued from the STA which was not polled in the previous data transmission cycle.
         In order to ensure the real-time nature of LRT, the traditional PCF retransmission mechanism can be modified. In the traditional PCF retransmission mechanism, the retransmission will not be performed until all the STAs in the polling list are polled, however, such a method cannot meet different acknowledgement time requirements of different STAs. In the present invention, the retransmission can be handled by polling group, i.e. after the STAs in one polling group have been polled, corresponding retransmission will be started, until all the data are successfully transmitted or a preset threshold for number of retransmissions is reached.
4) NRT communication period:
   Before the beginning of an NRT communication period, the AP will send a CF END frame to identify the beginning of transferring into the NRT communication period. Before the CF END frame is sent, the AP will first determine the remaining duration CycleDurRemaining of the current data transmission cycle and the random competition duration RTSTranDur of an NRT, judge whether CycleDurRemaining is greater than or equal to RTSTranDur, i.e., whether the remaining duration is enough to handle the random competition of an NRT, if yes, then it will instruct the STAs operating DCF to start random competition via the CF END, and start the NRT communication; otherwise it will no longer carry out data transmission within the remaining duration and wait for the next data transmission cycle.

In this case, the random competition duration RTSTranDur of an NRT can be: RTST ranDur = T_{CF END}+DIFS+CWₘᵢₙ+T_{RTS}+SIFS+T_{CTS}, where T_{CF END} is the transmission duration of CF END, DIFS is the interval between DCF frames, CWₘᵢₙ is the shortest duration of a competition window, T_{RTS} is the transmission duration of RTS, and T_{CTS} is the transmission duration of CTS.

Once it is determined that the remaining duration is enough to handle the random competition of an NRT, then the transmission duration field (Duration) in the CF END can be set as 0, the STAs operating DCF set NAV as 0 according to the Duration field and start a random competition so as to carry out data transmission.

After having entered the NRT communication period, based on the DCF mechanism, all the STAs can perform channel access competition by way of carrier sense multi-point access/collision avoidance (CSMA/CA), and in order to ensure that the time for which the STAs operating the DCF mechanism occupy the channel will not exceed the ending time of the current data transmission cycle, an RTS-CTS solution can be adopted to indicate the duration for the STAs that have failed in the competition to suspend data transmission.

If it is necessary to carry out downlink data transmission within the NRT period, then the remaining duration CycleDurRemaining of the current data transmission cycle and downlink communication duration DLDur will be first determined, wherein DLDur = PIFS+T_{DL-DATA}+SIFS+T_{ACK}, where PIFS is the interval between PCF frames, T_{DL-DATA} is the transmission duration of downlink data, and T_{ACK} is the transmission duration of the receiving acknowledgement of downlink data. Whether DLDur is less than or equal to CycleDurRemaining is judged, if yes, then downlink data transmission is allowed to be carried out; otherwise, the downlink data transmission will be prohibited.

If it is necessary to carry out uplink data transmission within the NRT period, then the STA needs to send an RTS first, and the duration NAV_{RTS} for the STA to carry out uplink communication is carried in the RTS, where NAV_{RTS} = SIFS+T_{CTS}+SIFS+T_{DATA}+SIFS+T_{ACK}. The duration information NAV_{RTS} can be carried in the transmission duration field (Duration) of the RTS.

In addition to the AP being capable of receiving the RTS of the STA succeeding in the competition, other STAs which failed in the competition can also receive the RTS; these STAs set their own NAV as NAV_{RTS}, and suspend data transmission within this time period so as to prevent conflict.

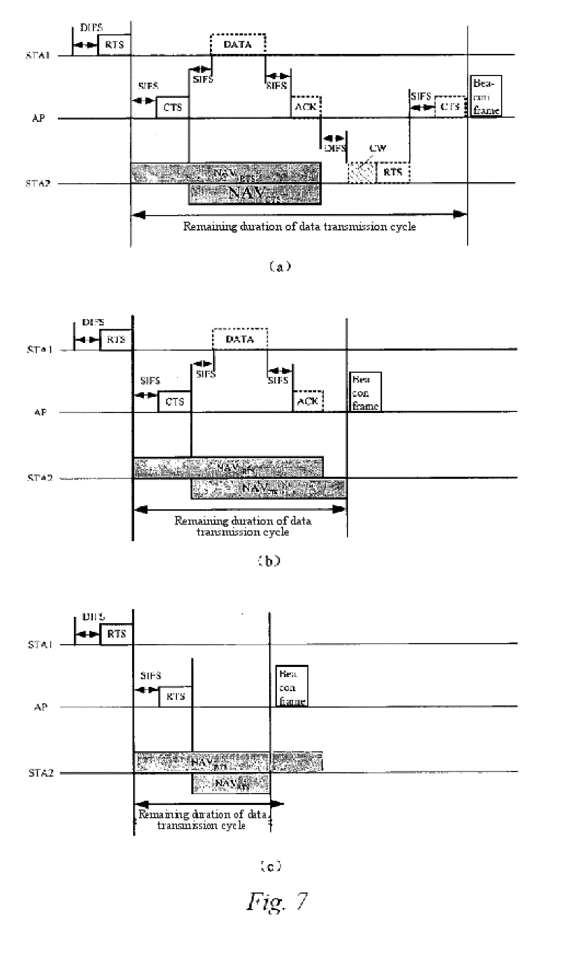

After having received the RST transmitted by the STAs, the AP determines the STA succeeding in the competition, and determines the remaining duration CycleDurRemaining of the current data transmission cycle and the remaining duration Value after one uplink communication is further performed, where Value = CycleDurRemaining - (DIFS+CWₘᵢₙ+T_{RTS}+SIFS+T_{CTS}) . The NAV_{RTS} of the STA succeeding in the competition is compared with Value and CycleDurRemainning, there are three situations as follows:
The first situation: if the NAV_{RTS} of the STA succeeding in the competition ≤ Value, it is indicated that the remaining duration of the current data transmission cycle is not only enough to carry out one uplink data transmission, it might also be possible to perform a next RTS access, therefore, the AP instructs, in the CTS sent, the STA succeeding in the competition to perform uplink communication, and instructs the STAs that failed in the competition to suspend data transmission until the uplink communication of the STA succeeding in the competition is finished, i.e. the STAs that failed in the competition are instructed to update the value of NAV to NAV_{RTS}―SIFS―T_{CTS}. It needs to be noted that because in fact the end point for the STAs that failed in the competition to suspend the data transmission is the same as the end point of the NAV_{RTS}, the NAV need not be updated, in which case the value of NAV is itself NAV_{RTS}―SIFS―T_{CTS}. This situation is as shown in Fig. 7(a), wherein STA1 succeeds in the competition, STA2 fails in the competition, and the AP instructs the STA2, in the CTS, to update the value of NAV (identified as NAV_{CTS} in the figure) to NAV_{RTS}―SIFS―T_{CTS}.

The second situation: if Value < the NAV_{RTS} of the STA succeeding in the competition ≤ CycleDurRemaining, it is indicated that the remaining duration of the current data transmission cycle is enough to perform one uplink data transmission, but not enough to perform a next RTS access, therefore, the AP instructs the STA succeeding in the competition, in the CTS sent, to perform uplink communication, and instructs the STAs that failed in the competition to suspend data transmission until the current data transmission cycle is ended, i.e. the STAs that failed in the competition are instructed to update the value of NAV to CycleDurRemaining-SIFS―T_{CTS}. This situation is as shown in Fig. 7(b), wherein STA1 succeeds in the competition, STA2 fails in the competition, and the AP instructs the STA2, in the CTS, to update the value of NAV (identified as NAV_{CTS} in the figure) as CycleDurRemaining-SIFS―T_{CTS}.

The third situation: if the NAV_{RTS} of the STA succeeding in the competition > CycleDurRemaining, it is indicated that the remaining duration of the current data transmission cycle is not enough to carry out one uplink data transmission, then the AP sends an RTS packet, and in the RTS data packet, all the STAs operating the DCF mechanism are instructed to suspend data transmission until the current data transmission cycle is ended, i.e. all the STAs operating the DCF mechanism update the value of NAV to CycleDurRemaining―SIFS―T_{CTS}. This situation is as shown in Fig. 7(c), wherein STA1 succeeds in the competition, STA2 fails in the competition, and the AP instructs the STA1 and STA2, in the RTS sent the second time, to update the value of NAV (identified as NAV_{RTS} in the figure) to CycleDurRemaining―SIFS―T_{CTS}.

After the current data transmission cycle is ended, the next data transmission cycle begins with a beacon frame again, and repeats the operation of the above-mentioned periods.

In addition to the case where an HRT communication period, an LRT communication period and an NRT communication period are simultaneously included in one data transmission cycle, the abovementioned method of the present invention is also suitable for the situation where an HRT communication period and an LRT communication period are included; or an LRT communication period and an NRT communication period are included; or an HRT communication period and an NRT communication period are included, etc.

It can be seen from the above description that the method provided in the present invention can include the following advantages:
1) in the present invention, a preset data transmission cycle is divided into N periods, which N periods can include at least two of: an HRT communication period, an LRT communication period and an NRT communication period, and data transmission can be carried out according to the corresponding transmission mechanism within each period. By way of this method, services with different real-time application demands can be integrated into one communication framework, thereby achieving satisfaction of the demand for applications with different real-time requirements to coexist in a PROFINET system.
2) What is also particularly disclosed in the present invention is that when communication modes with different real-time requirements coexist, the priority is arranged from high to low as HRT, LRT and NRT, and in the polling list, the higher the acknowledgement time requirement of an STA, the higher its ranking, thereby ensuring that a service demand which has a relatively high requirement for the acknowledgement time can be promptly satisfied.
3) In the present invention, in the situation where there is an HRT application demand, the AP itself is added into the polling list and is taken as the first object to be polled, the MRA mechanism being operated when performing self-polling; by way of embedding the MRA mechanism into the PCF polling framework, the switching from HRT communication period to LRT communication period is simplified, and the switching is also smoother.
4) Within the NRT communication period, the present invention provides a modified RTS-CTS solution, ensuring a strict boundary for the data transmission cycle, such that the random competition in the NRT communication will never exceed the boundary of the data transmission cycle and thus cause interference to the next data transmission cycle, and the modification of the solution is minor, being compatible with the existing RTS-CTS solution to the greatest extent.

What are described above are merely preferred embodiments of the present invention and not intended to limit the present invention, and any modification, equivalents, or improvements made in the spirit and principles of the present invention shall be included in the scope of protection of the present invention.

## Claims

1. A communication method in a PROFINET communication system, **characterized in that** the method comprises:
dividing a predefined data transmission cycle into N periods according to the real-time application requirements of a service, with the N periods comprising at least two of: a high real-time (HRT) communication period, a low real-time (LRT) communication period and a non-real-time (NRT) communication period; and
an access point (AP) carrying out data transmission within the HRT communication period of the data transmission cycle according to an HRT transmission mechanism, carrying out data transmission within the LRT communication period according to an LRT transmission mechanism, and carrying out data transmission within the NRT communication period according to an NRT transmission mechanism.

2. The method as claimed in claim 1, **characterized in that** the duration of said data transmission cycle is less than or equal to the shortest time cycle required by HRT.

3. The method as claimed in claim 1, **characterized in that** the priority order of said N periods in the data transmission cycle from high to low is as follows: the HRT communication period, the LRT communication period and the NRT communication period.

4. The method as claimed in claims 1 to 3, **characterized in that** said HRT transmission mechanism is a multi-receiver aggregation (MRA) mechanism, said LRT transmission mechanism is a point coordination function (PCF) mechanism, and said NRT transmission mechanism is a distributed coordination function (DCF) mechanism.

5. The method as claimed in claim 4, **characterized in that** said AP generates a polling list according to the operation mechanism of a client terminal (STA), which comprises in particular: if there are STAs operating the MRA mechanism, then taking the AP itself as the first object to be polled in the polling list; and if there are STAs operating the PCF mechanism, then arranging the STAs operating the PCF mechanism into the polling list behind the AP in order from high to low according to the acknowledgement time requirements thereof.

6. The method as claimed in claim 5, **characterized in that** said arranging the STAs operating the PCF mechanism into the polling list in order from high to low according to the acknowledgement time requirements thereof comprises in particular: arranging those STAs having the same acknowledgement time requirement among the STAs operating the PCF mechanism into one polling group, the higher the acknowledgement time requirement of an STA, the higher the ranking of the STA in the polling list, so that in the same polling group the STAs are arranged from bottom to top according to the associated identifiers thereof.

7. The method as claimed in claim 4, **characterized in that** said AP sends a beacon frame at the beginning of each data transmission cycle to instruct all the STAs operating the DCF mechanism to suspend data transmission.

8. The method as claimed in claim 7, **characterized in that** said AP determines whether there is currently an HRT service to be transmitted, if yes, it enters an HRT communication period after said beacon frame; otherwise it enters an LRT communication period after said beacon frame.

9. The method as claimed in claim 5, **characterized in that** within said HRT communication period, said AP determines that the first object to be polled in said polling list is the AP itself, then it starts data transmission with the STAs operating the MRA mechanism by way of self-polling, and when the data transmission is completed said AP sends a transmission block acknowledgement (B-ACK) to indicate the end of the HRT communication period.

10. The method as claimed in claim 5, **characterized in that** at the beginning of said LRT communication period, said AP executes the steps of:
A. judging whether there exists a next STA to be polled according to the polling list, if yes, then performing step B; otherwise sending a CF END frame to indicate the end of the LRT communication period;
B. determining the remaining duration of the current data transmission cycle, and determining the duration needed for one polling within the LRT communication period, then judging whether the remaining duration so determined is greater than or equal to the duration needed for one polling within the LRT communication period, if yes, then performing step C, otherwise performing step D;
C. carrying out the next polling according to the order in the polling list, and returning to step A after the next polling is completed;
D. waiting for the next data transmission cycle when the data transmission is no longer carried out within the remaining duration of the current data transmission cycle.

11. The method as claimed in claim 10, **characterized in that** at the beginning of said LRT communication period, polling is started by continuing from the STA in the polling list which was not polled in the previous data transmission cycle.

12. The method as claimed in claim 6, **characterized in that** within said LRT communication period, after all the STAs in a polling group have been polled, data retransmission is carried out for the STAs in the polling group, until all the data are successfully transmitted or a predefined threshold for number of retransmisions is reached.

13. The method as claimed in claim 4, **characterized in that** before the beginning of said NRT communication period, said AP determines the remaining duration of the current data transmission cycle and the random competition period of an NRT, and judges whether the remaining duration so determined is greater than or equal to the random competition period of an NRT; if yes, then said AP sends a CF END frame to instruct those STAs operating the DCF mechanism to start the NRT communication, otherwise it does not carry out data transmission within the remaining duration, and waits for the next data transmission cycle.

14. The method as claimed in claim 13, **characterized in that** after said AP has sent the CF END frame, it enters an NRT communication period, and if it is necessary to carry out downlink data transmission, then it first determines the remaining duration of the current data transmission cycle and the duration for the downlink communication, and judges whether the remaining duration so determined is greater than or equal to the duration for the downlink communication; if yes, it allows the downlink data transmission to be carried out, otherwise it prohibits the downlink data transmission.

15. The method as claimed in claim 13, **characterized in that** after those STAs operating the DCF mechanism have received said CF END frame, if it is necessary to carry out uplink data transmission, those STAs operating the DCF mechanism send an RTS to carry out the random competition, wherein, the RTS comprises the duration NAV_{RTS} for the uplink communication;
after those STAs, among the STAs operating the DCF mechanism, which have failed in the competition, have received the RTS from the STA succeeding in the competition, they set the duration for suspending the data transmission as NAV_{RTS};
after said AP has received the RTS sent from the STA succeeding in the competition, it determines the remaining duration of the current data transmission cycle and the duration remaining after an uplink communication if such is completed; if said NAV_{RTS} is less than or equal to the duration remaining after uplink communication if such is completed, then said AP sends a CTS to instruct the STA succeeding in the competition to carry out the uplink communication, and instructs that the duration for those STAs that failed in the competition to suspend data transmission shall be the duration for the STA succeeding in the competition to carry out the uplink communication; if said NAV_{RTS} is greater than the duration remaining after uplink communication if such is carried out, and is less than or equal to the remaining duration of the current data transmission cycle, then said AP sends a CTS to instruct the STA succeeding in the competition to carry out the uplink communication, and instructs those STAs that failed in the competition to suspend data transmission until the end of the current data transmission cycle; and if said NAV_{RTS} is greater than the remaining duration of the current data transmission cycle, then said AP sends an RTS to instruct all the STAs operating the DCF mechanism to suspend data transmission until the end of the current data transmission cycle.
